# EUROPÄISCHE PATENTSCHRIFT

(11) **EP 1 901 642 B1**
(45) Veröffentlichungstag und Bekanntmachung des Hinweises auf die Patenterteilung: **21.11.2012**
(21) Anmeldenummer: 06777403.4
(22) Anmeldetag: 21.06.2006
(51) Int. Cl.: A47L 9/32, A47L 9/28

(54) **STAUBSAUGER**
VACUUM CLEANER
ASPIRATEUR

(30) Priorität: 24.06.2005 DE 102005029402
(43) Veröffentlichungstag der Anmeldung: 26.03.2008
(73) Patentinhaber: Vorwerk & Co. Interholding GmbH, 42275 Wuppertal (DE)
(72) Erfinder: FIESELER, Martin, 45134 Essen (DE)
(74) Vertreter: Müller, Enno
(86) Internationale Anmeldenummer: PCT/EP2006/063411
(87) Internationale Veröffentlichungsnummer: WO 2006/136583

(56) Entgegenhaltungen:
- EP-A- 0 546 620
- DE-A1- 19 902 130
- US-A- 5 924 164
- US-A1- 2004 200 032
- US-B1- 6 768 073
- PATENT ABSTRACTS OF JAPAN Bd. 2003, Nr. 09, 3. September 2003 (2003-09-03) -& JP 2003 135346 A (TOSHIBA TEC CORP), 13. Mai 2003 (2003-05-13)

## Beschreibung

Die Erfindung betrifft einen Staubsauger mit einem einen Elektromotor aufweisenden Basisgerät und einem hiermit steckverbindbaren Stiel mit Betätigungsgriff, mit einer mechanisch zu bewegenden Stelleinheit zur Steuerung der Leistung des Elektromotors, wobei ein zur Steuerung der Leistung des Elektromotors erforderliches Signal von dem Stiel zum Basisgerät geleitet wird und in dem Basisgerät ein Signalempfänger angeordnet ist.

Staubsauger der in Rede stehenden Art sind bekannt. Diese weisen an dem mit dem Basisgerät steckverbindbaren Stiel einen Betätigungsgriff auf, an welchem weiter beispielsweise ein daumenbetätigbarer Leistungssteller angeordnet ist, der die mechanische Stelleinheit ausformt. Dieser wirkt elektrisch über Kabel in dem Betätigungsgriff oder mechanisch auf in dem Basisgerät angeordnete Schalter. Ein bekanner staubsauger ist zu US 6768073 B1 beschrieben.

Im Hinblick auf den zuvor beschriebenen Stand der Technik wird eine technische Problematik der Erfindung darin gesehen, einen Staubsauger der in Rede stehenden Art hinsichtlich der Steuerung der Leistung des Elektromotors im Basisgerät weiter zu verbessern.

Diese Problematik ist zunächst und im Wesentlichen durch den Gegenstand des Anspruchs 1 gelöst, wobei darauf abgestellt ist, dass in dem Betätigungsgriff ein Signalgeber angeordnet ist, der durch die mechanische Bewegung der Stelleinheit selbst mit Energie versorgt wird. Zufolge dieser erfindungsgemäßen Ausgestaltung ist eine Anordnung geschaffen, mittels welcher die Leistung des Basisgeräts bzw. des in dem Basisgerät angeordneten Elektromotors zur Erbringung der Saugleistung geregelt werden kann, ohne dass in dem die mechanisch zu bewegende Stelleinheit aufweisenden Betätigungsgriff und darüber hinaus bevorzugt auch ohne dass in dem gesamten steckverbindbaren Stiel eine gesonderte Energieversorgung für die Stelleinheit vorgesehen ist, so bspw. in Form von Akkus bzw. in Form eines Elektroanschlusses, der zugleich über die Steckverbindung auch als Elektroanschluss für das Basisgerät dient. Bei der vorgeschlagenen Lösung ist das Basisgerät über ein direkt mit deren Elektroeinheit verbundenes Anschlusskabel versorgt. Der Stiel bzw. der Betätigungsgriff ist als autarke Einheit gestaltet, die sich selbst mit Energie versorgt. So wird über den Betätigungsgriff, der in Form eines Schiebeschalters gebildet sein kann, ein Signal erzeugt, das mittels der durch die mechanische Bewegung der Stelleinheit erzeugte Energie an das Basisgerät geleitet und dort von einem Signalempfänger ausgewertet wird. Die Funktion des Betätigungsgriffes ist unabhängig vom Zuordnungszustand zum Basisgerät und weiterhin unabhängig von dem Ladezustand eines etwaigen Energiespeichers, bspw. in Form eines Akkus. Demzufolge ist der Betätigungsgriff und der vorgesehene Signalgeber in einer steten Bereitschaftsstellung, aus welcher heraus in einfachster Weise ein Signal zur Steuerung des geräteseitigen Elektromotors erzeugt werden kann. Eine entsprechende Konfiguration kann auch zur Steuerung eines aktiven Vorsatzgerätes des Staubsaugers dienen, bei welcher über den stielseitigen Betätigungsgriff und die dort vorgesehene mechanisch zu bewegende Stelleinheit das Basisgerät überbrückend auf das Vorsatzgerät regelnd Einfluss genommen werden kann.

Die Gegenstände der weiteren Ansprüche sind nachstehend in Bezug zu dem Gegenstand des Anspruchs 1 erläutert, können aber auch in ihrer unabhängigen Formulierung von Bedeutung sein.

So ist in einer vorteilhaften Weiterbildung des Erfindungsgegenstandes vorgesehen, dass die mechanische Bewegung der Stelleinheit auf ein Piezoelement zur Energieerzeugung einwirkt. Entsprechend wird die Energie zur Übertragung der Schaltinformation aus der mechanischen Bewegung des Schaltvorganges gewonnen. Bevorzugt ist die mechanisch zu bewegende Stelleinheit als Stufenschalter ausgebildet. Dieser ist mit einer Piezotaste oder dergleichen kombiniert. Bei Betätigung der Piezotaste wird über eine Feder, die beim Betätigen zunächst vorgespannt wird und die sich dann beim weiteren Betätigen der Stelleinheit schlagartig entspannt, ein impulsartiger Druck auf ein Piezokristall gegeben. Hierdurch wird elektrische Energie in Form von elektrischer Ladung erzeugt, die dann der Übertragung der Schaltinformation zum Basisgerät dient. Mittels einer elektrischen Schaltung wird zugleich mit der Bewegung der mechanischen Stelleinheit die eingenommene Position der Stelleinheit abgefragt, welche Information dann bevorzugt auf optischem Wege übertragen wird. Zufolge der erfindungsgemäßen Ausgestaltung ist im Bereich des mit dem Basisgerät steckverbindbaren Stiels keine Batterie oder dergleichen erforderlich. Zudem sind auch keine elektrischen oder mechanischen Verbindungen erforderlich, insbesondere dann, wenn das erzeugte Stellsignal auf optischem Wege durch den Stiel in das Basisgerät geleitet wird. Als besonders vorteilhaft erweist sich die erfindungsgemäße Ausgestaltung dahingehend, dass keine elektrische Verbindungen zu (haushalts-) spannungsführenden Teilen vorliegen. Darüber hinaus ist hierdurch eine kostengünstige sowie verschleiß- und somit wartungsarme Signalübertragung erreicht.

Nachstehend ist die Erfindung anhand der beigefügten Zeichnung, die lediglich ein Ausführungsbeispiel darstellt, näher erläutert. Es zeigt:
- Fig.1: in perspektivischer Darstellung einen Staubsauger der in Rede stehenden Art mit einem Basisgerät, einem Vorsatzgerät und einem an dem Basisgerät steckverbundenen Stiel;

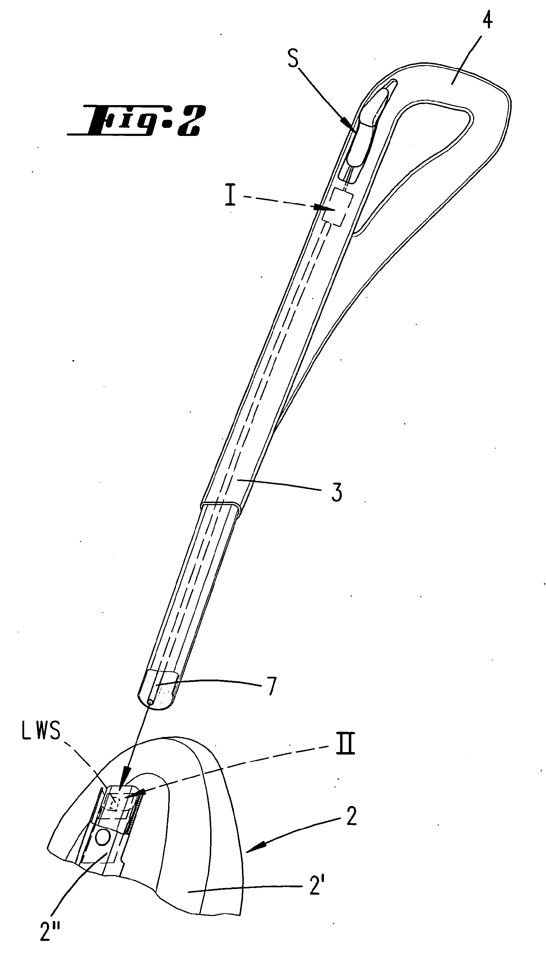

- Fig. 2: in einer mit Bezug zu Fig. 1 vergrößerten perspektivischen Darstellung den Stiel in abgezogener Zuordnungsstellung zu dem partiell dargestellten Basisgerät;
- Fig. 3: eine schematische Darstellung der Schaltungsanordnungen im Stiel und im Basisgerät.

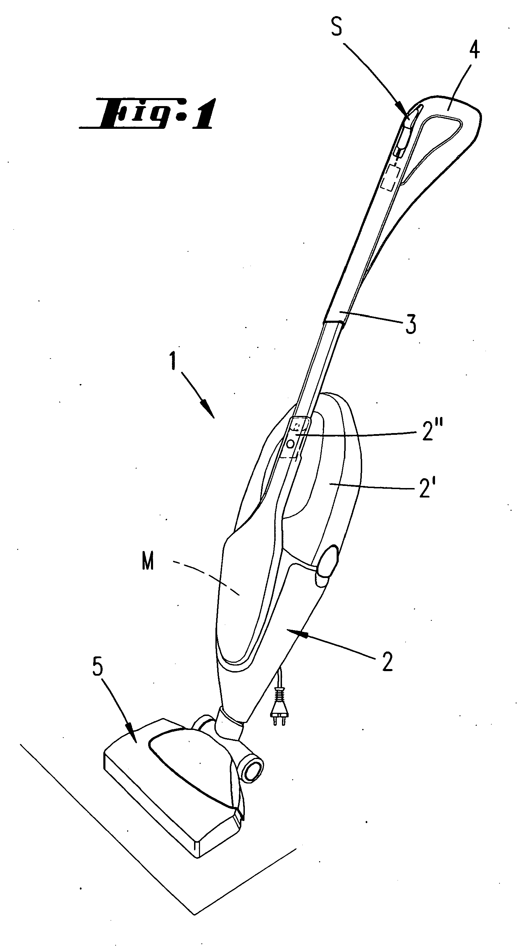

Dargestellt und beschrieben ist zunächst mit Bezug zu Fig.1 ein Staubsauger 1, insbesondere Haushalts-Staubsauger, welcher als handgeführtes Stielgerät ausgeführt ist. Dieses weist zunächst ein Basisteil 2 auf, mit einem nicht näher dargestellten Elektromotor M, zum Betrieb einer Saug- / Gebläse-Einheit. An dem Basisgerät 2 ist zur Aufnahme des aufgesaugten Staubgutes eine Filterkassette 2' angedockt. Diese beinhaltet einen nicht dargestellten Filterbeutel. Die Stromversorgung des Elektromotors M sowie weiterer elektrischer / elektronischer Bauelemente / -gruppen erfolgt über ein direkt in das Basisgerät 2 geführtes Netzkabel.

Weiter besitzt das Basisgerät 2 einen schwanenhalsförmigen Fortsatz, welcher sich über den Bereich der Filterkassette 2' erstreckt. Im Bereich des freien Endes formt dieser Fortsatz eine Steckaufnahme 2" für einen Stiel 3 des Staubsaugers 1 aus. Die zugeordneten Enden von Steckaufnahme 2" und Stiel 3 sind in bekannter Weise als mechanisch wirkende Steckverbindungselemente ausgebildet. Der Stiel 3 ist von der Stromversorgung des Staubsaugers 1 entkoppelt.

Im Bereich des freien Endes des Stieles 3 ist ein Betätigungsgriff 4 ausgeformt. Dieser weist an ergonomisch günstiger Position eine daumenbetätigbare Stelleinheit S in Form eines Leistungsstellers auf. Über diese Stelleinheit S ist die Leistung des in dem Basisgerät 2 aufgenommenen Elektromotors M einstellbar, zufolge dessen die Saugleistung des Staubsaugers 1 über die Stelleinheit S an passbar ist, beispielsweise an den Bodenbelag.

Zur Bodenbearbeitung ist das Basisgerät 2 strömungsmäßig mit einem Vorsatzgerät 5 verbunden, welches in dem dargestellten Ausführungsbeispiel als eine Saugdüse ausgebildet ist.

Zur Steuerung des Elektromotors M wird ein Signal vom Betätigungsgriff 4 bzw. von der Stelleinheit S zum Basisgerät 2 geleitet und dort von einem Signalempfänger erfasst. Das ermittelte Signal wird mittels einer Auswerteelektronik zur Ansteuerung des Elektromotors M genutzt.

Die Signalübertragung erfolgt in dem dargestellten Ausführungsbeispiel mittels Lichtwellen, wozu in dem Stiel 3 ein Lichtwellenleiter 7 angeordnet ist. Dieser erstreckt sich vom Betätigungsgriff 4 bzw. vom Bereich der Stelleinheit S bis zum freien Steckende des Stiels 3.

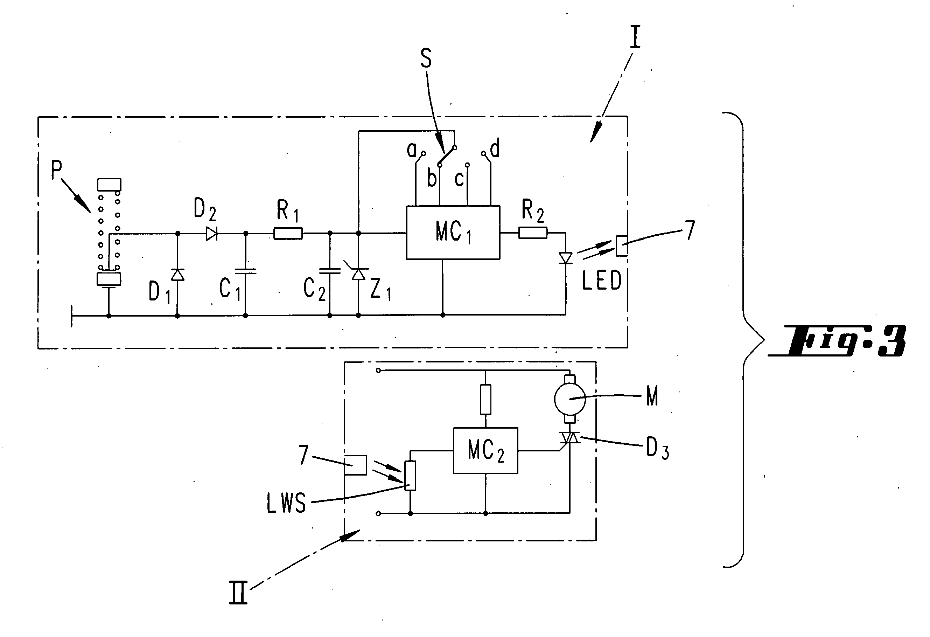

Basisgeräteseitig ist im Bereich der Steckaufnahme 2" eine Auswerteelektronik vorgesehen, die in Fig. 3 mit II bezeichnet ist. Diese Auswerteelektronik umfasst zunächst einen Lichtwellensensor LWS und einen Mikroprozessor MC₂, der über einen Triac D₃ steuernd auf den Motor M einwirkt. Dieser Motorregelung ist abhängig von dem erfassten Lichtsignal.

Letzteres wird ausgesandt von einer Leuchtdiode LED, die Bestandteil ist einer Steuerelektronik I, die im Bereich der Stelleinheit S, d.h. im Bereich des Betätigungsgriffes 4 angeordnet ist. Diese Leuchtdiode LED ist dem dem Steckende des Stieles 3 abgewandten Ende des Lichtwellenleiters 7 zugeordnet.

Die Steuerelektronik I ist als autarke Schaltung realisiert, benötigt entsprechend keine gesonderte Energiezufuhr. Die benötigte Energie wird über eine mit der mechanisch zu bewegenden Stelleinheit S kombinierte Piezotaste P erreicht. Bei Betätigen der Piezotaste P wird über eine Feder, die beim Betätigen zunächst vorgespannt wird und sich dann beim weiteren Betätigen schlagartig entspannt, ein impulsartiger Druck auf einen Piezokristall gegeben. Hierdurch wird elektrische Energie in Form von elektrischer Ladung erzeugt.

Die beim Betätigen des Piezotasters P erzeugte Ladung wird mit Hilfe der Dioden D₁ und D₂ im Kondensator C₁ zwischengespeichert. Über den Widerstand R₁ wird hiernach der Kondensator C₂ aufgeladen, wobei die Spannung mit Hilfe der Zehnerdiode Z₁ begrenzt wird.

Im Kondensator C₂ ist nun eine konstante Spannung U_{z1}, solange die Spannung im Kondensator C₁ größer ist als die Spannung U_{z1}. Der Zeitraum, für den die Spannung im Kondensator C₂ = U_{z1} ist, hängt von der erzeugten Ladung und vom Entladestrom durch die nachfolgende Schaltung ab.

Mit Hilfe der Spannung im Kondensator C₂ wird eine Mikroprozessorschaltung (MC₁) betrieben, die nach Überschreiten der zum Betrieb des Mikroprozessors erforderlichen Mindestspannung Uₘᵢₙ aktiviert wird. Der Mikroprozessor MC₁ fragt sofort nach seiner Initialisierung den Zustand der als Stufenschalter ausgebildeten Stelleinheit S ab und sendet je nach gewählter Stufenschaltung a, b, c oder d über die Leuchtdiode LED ein serielles optisches Signal aus, das vom Zustand der Stelleinheit S abhängt.

Nach dem Aussenden des Signals wird der Kondensator C₂ entladen, bis die Spannung Uₘᵢₙ unterschritten ist.

Das serielle optische Signal wird im Innern des Stiels 3 auf direktem Wege über den Lichtwellenleiter 7 oder alternativ über Reflektionen an den optischen Empfänger LWS im Basisgerät 2 übertragen, mit dessen Hilfe nach einer Auswertung der Staubsauger 1 gesteuert wird.

## Patentansprüche

1. Staubsauger (1) mit einem einen Elektromotor (M) aufweisenden Basisgerät (2) und einem hiermit steckverbindbaren Stiel (3) mit Betätigungsgriff (4), mit einer mechanisch zu bewegenden Stelleinheit (S) zur Steuerung der Leistung des Elektromotors (M), wobei ein zur Steuerung der Leistung des Elektromotors (M) erforderliches Signal von dem Stiel (3) zum Basisgerät (2) geleitet wird und in dem Basisgerät (2) ein Signalempfänger angeordnet ist, **dadurch gekennzeichnet, dass** in dem Betätigungsgriff (4) ein Signalgeber angeordnet ist, der durch die mechanische Bewegung der Stelleinheit (S) selbst mit Energie versorgt wird.

2. Staubsauger nach Anspruch 1, **dadurch gekennzeichnet, dass** die mechanische Bewegung der Stelleinheit (S) auf ein Piezoelement (P) zur Energieerzeugung einwirkt.

3. Staubsauger nach einem oder mehreren der vorhergehenden Ansprüche , **dadurch gekennzeichnet, dass** mittels einer elektrischen Schaltung (II) zugleich mit der Bewegung der mechanischen Stelleinheit (S) die eingenommene Position der Stelleinheit (S) abgefragt wird.

## Claims

1. Vacuum cleaner (1) comprising a base apparatus (2), which has an electric motor (M), and a shank (3) which can be plug-connected to said base apparatus and has an operating handle (4) with an actuating unit (S), which can be moved mechanically, for controlling the power of the electric motor (M), a signal which is required to control the power of the electric motor (M) being passed from the shank (3) to the base apparatus (2), and a signal receiver being disposed in the base apparatus (2), **characterized in that** a signal transmitter, which itself is supplied with energy by the mechanical movement of the actuating unit (S), is disposed in the operating handle (4).

2. Vacuum cleaner according to Claim 1, **characterized in that** the mechanical movement of the actuating unit (S) acts on a piezo element (P) for generating energy.

3. Vacuum cleaner according to either or both of the preceding claims, **characterized in that** the position assumed by the actuating unit (S) is checked by means of an electrical circuit (II) at the same time as the mechanical actuating unit (S) moves.

## Revendications

1. Aspirateur (1) comprenant un appareil de base (2) qui comprend un moteur électrique (M) et un manche (3) susceptible d'être connecté par enfichage avec celui-ci comprenant une poignée de manoeuvre (4), qui comprend une unité de réglage (S) à déplacer mécaniquement pour le réglage de la puissance du moteur électrique (M), un signal nécessaire pour le réglage de la puissance du moteur électrique (M) étant conduit du manche (3) à l'appareil de base (2) et un récepteur de signal étant agencé dans l'appareil de base (2), **caractérisé en ce qu'**un générateur de signal est agencé dans la poignée de manoeuvre (4), qui est lui-même alimenté en énergie par le mouvement mécanique de l'unité de réglage (S).

2. Aspirateur selon la revendication 1, **caractérisé en ce que** le mouvement mécanique de l'unité de réglage (S) agit sur un élément piézo (P) pour la génération d'énergie.

3. Aspirateur selon une ou plusieurs des revendications précédentes, **caractérisé en ce que** la position prise par l'unité de réglage (S) est interrogée au moyen d'un circuit électrique (II) parallèlement au mouvement de l'unité de réglage mécanique (S).
